# EUROPÄISCHE PATENTSCHRIFT

(11) **EP 0 819 511 B1**
(45) Veröffentlichungstag und Bekanntmachung des Hinweises auf die Patenterteilung: **07.11.2001**
(21) Anmeldenummer: 97105929.0
(22) Anmeldetag: 10.04.1997
(51) Int. Cl.: B29C 47/08

(54) **Extrusionskopf mit Schliesszylindern**
Extrusion head with clamping cylinders
Tête d'extrusion avec des cylindres de serrage

(30) Priorität: 16.07.1996 DE 19628608
(43) Veröffentlichungstag der Anmeldung: 21.01.1998
(73) Patentinhaber: Krupp Elastomertechnik GmbH, 21079 Hamburg (DE)
(72) Erfinder: Hirschkorn, Ingo, 21629 Neu Wulmstorf (DE)
(74) Vertreter: John, Ernst, Dipl.-Ing.

(56) Entgegenhaltungen:
- EP-A- 0 270 816
- DE-A- 3 637 731
- US-A- 4 693 679
- DATABASE WPI Section Ch, Week 8505 Derwent Publications Ltd., London, GB; Class A32, AN 85-030416 XP002044313 & SU 1 100 109 A (RUBBER TECH EQUIP INST) , 30.Juni 1984

## Beschreibung

Die Erfindung betrifft einen Extrusionskopf mit einem feststehenden Kopfteil und mehreren schwenkbaren Kopfteilen, die durch Schließzylinder über eine auf Zug beanspruchbare, lösbare formschlüssige Verbindung zwischen der Kolbenstange der Schließzylinder und einem Kopfteil an das feststehende Kopfteil angedrückt und mit diesem verspannt werden können.

Ein gattungsgemäßer Extrusionskopf ist aus der DE 37 36 231 C2 (vgl. insbesondere dortige Fig. 4 und 5) bekannt. Bei dem bekannten Extrusionskopf sind die Zylindergehäuse der Schließzylinder am feststehenden Kopfteil befestigt, während die Enden der Kolbenstange der Schließzylinder lösbar mit den schwenkbaren Kopfteilen verbindbar sind.

Aus Platzgrüngen sind die Schließzylinder bei dem bekannten Extrusionskopf seitlich im wesentlichen waagerecht und parallel angeordnet. Die durch den Betriebsdruck des zu extrudierenden Materials auf das betreffende schwenkbare Kopfteil wirkende resultierende Kraft, die sich aus den Winkeln der einzelnen Trennfugen-Teilflächen zwischen den Kopfteilen, deren Durchlaßquerschnitt und den Druckverhältnissen ermitteln läßt, hat aber in der Regel keine waagerechte Richtung sondern eine - vom feststehenden Kopfteil hergesehen - schräg nach oben bzw. schräg nach unten verlaufende Richtung. Diese von der Waagerechten abweichende Richtung führt dazu, daß das unter Betriebsdruck stehende Material ein aufbiegendes Moment auf das schwenkbare Kopfteil ausübt, was die Gefahr der Undichtigkeit in sich birgt.

Der Erfindung liegt die Aufgabe zugrunde, einen Extrusionskopf der eingangs genannten Art derart zu gestalten, daß die Gefahr der Undichtigkeit gebannt werden kann.

Diese Aufgabe wird dadurch gelöst, daß bei zumindest einem schwenkbaren Kopfteil die Zylindergehäuse der diesem Kopfteil zugeordneten Schließzylinder an dem betreffenden schwenkbaren Kopfteil befestigt sind und daß die Kolbenstangen dieser Schließzylinder mit dem feststehenden Kopfteil die auf Zug beanspruchbare, lösbare formschlüssige Verbindung bilden. Durch das Verlegen der verhältnismäßig großen Zylindergehäuse der Schließzylinder vom feststehenden Mittelteil zu den schwenkbaren Kopfteilen nach außen ergibt sich, wie aus der Zeichnung ersichtlich ist, die Möglichkeit, die Achsen der Schließzylinder, vom feststehenden Mittelteil ausgehend, weiter nach außen, d. h. unter einem größeren Winkel anzuordnen. Dadurch können die Achsen der Schließzylinder besser an die Richtung der resultierenden Betriebskräfte auf die schwenkbaren Kopfteile angepaßt werden.

Eine weitere Verbesserung zum Dichthalten des Extrusionskopfes wird durch die Erfindung dann erreicht, wenn die Achse der Schließzylinder - bei geschlossenem Extrusionskopf - in der Richtung der durch den Innendruck erzeugten resultierenden Kraft auf das zugeordnete schwenkbare Kopfteil angeordnet ist.

Die Ansprüche 3 bis 5 beschreiben vorteilhafte Ausführungsformen der lösbaren formflüssigen Verbindung zwischen der Kolbenstange der Schließzylinder und dem feststehenden Kopfteil.

Die im Anspruch 6 vorgeschlagene Ausführung des Schließzylinders als Dreh-Hub-Kombination, bei der die Kolbenstange wahlweise linear bewegt und/oder gedreht werden kann, erlaubt eine äußerst kurze Bauform, um die notwendige Schließ- bzw. Spannkraft zu erzeugen und die lösbarere formschlüssige Verbindung herzustellen bzw. aufzuheben.

Ein Ausführungsbeispiel der Erfindung ist in der Zeichnung schematisch dargestellt und wird im folgenden näher erläutert. Es zeigen
- **Fig. 1**: einen Extrusionskopf mit an den schwenkbaren Kopfteilen befestigten Schließzylindern in einer Seitenansicht,
- **Fig. 2**: das Ende der Kolbenstange des Schließzylinders und die entsprechenden formschlüssigen Gegenstücke am feststehenden Kopfteil vor dem Schließen in einer perspektivischen Darstellung und

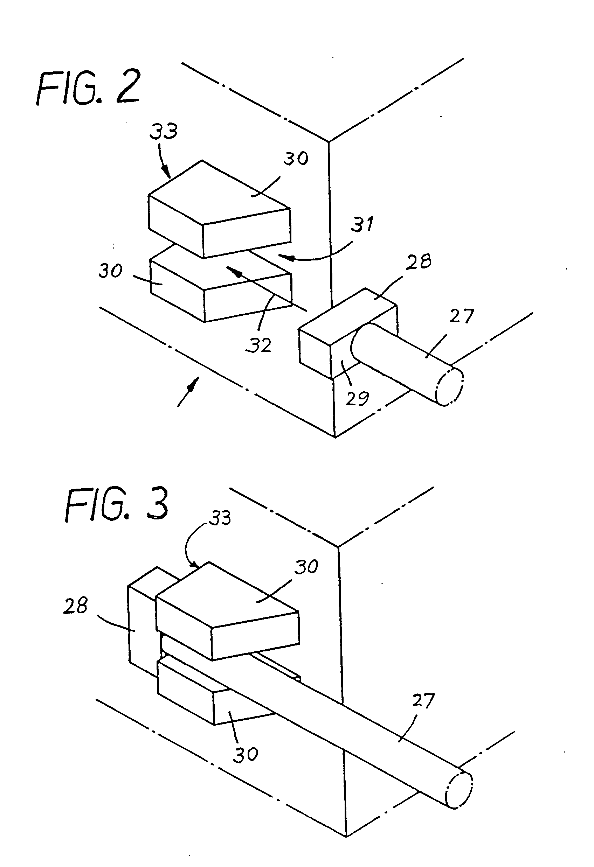

- **Fig. 3**: die vorgenannten Teile im Zustand des Schließens und Verspannens der Kopfteile in perspektivischer Darstellung.

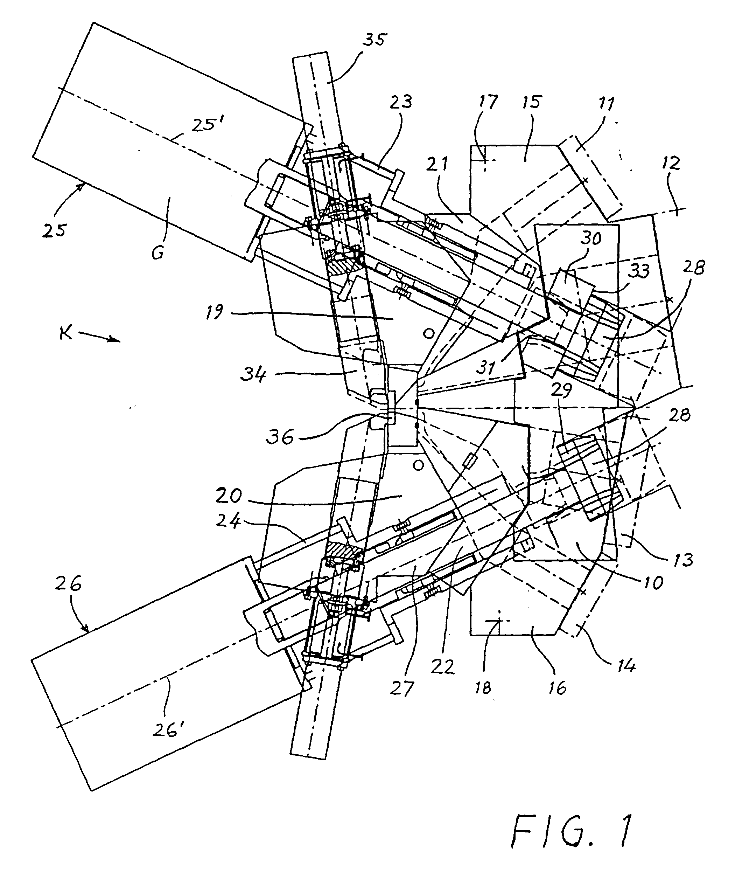

Fig. 1 zeigt einen Extrusionskopf K einer Vierfach-Extrusionsanlage. An dem feststehenden Mittel- oder Kopfteil 10 sind die Flanschverbindungen 11, 12, 13, 14 für vier (nicht dargestellte) Extruder mit strichpunktierten Linien angedeutet. Das feststehende Kopfteil 10 weist an oberen und unteren Vorsprüngen 15, 16 Gelenkstellen 17, 18 auf, an denen, wie in der erwähnten DE 37 36 291 C2 näher offenbart, jeweils ein oberes bzw. unteres schwenkbares Kopfteil 19, 20 und Zwischenteile 21, 22 angelenkt sind.

An den Außenseiten der schwenkbaren Kopfteile 19, 20 ist jeweils über eine Halterung 23, 24 eine als Schließ- oder Spannzylinder dienende hydraulische Dreh-Hub-Kombination 25, 26 befestigt. Die Dreh-Hub-Kombinationen 25, 26 weisen jeweils eine Kolbenstange 27 auf, die an ihrem Ende mit einem Hammerkopf 28 mit zwei radialen Vorsprüngen 29 versehen ist. Die Achsen der Dreh-Hub-Kombinationen 25, 26 sind mit 25', 26' gekennzeichnet.

Das feststehende Mittelteil 10 weist - bezogen auf den geschlossenen Extrusionskopf - in der Flucht der Kolbenstangen 27 der Dreh-Hub-Kombinationen 25, 26 ein Paar von Vorsprüngen 30 auf, die zwischen sich einen Durchlaß 31 bilden. In Fig. 2 ist angedeutet, wie die Kolbenstange 27 mit zum Durchlaß 31 ausgerichtetem Hammerkopf 28 in Richtung des Pfeils 32 durch den Durchlaß 31 bewegt wird. Wenn der Hammerkopf 28 den Durchlaß 31 vollständig passiert hat, wird die Bewegung der Kolbenstange 27 gestoppt und die Kolbenstange mit dem Hammerkopf 28 um 90° (bei *n* Vorsprüngen um 360/*n*°) gedreht und unter dem betrieblich vorgesehenen Spanndruck der Dreh-Hub-Kombination gegen die Anlageflächen 33 der Vorsprünge 30 gepreßt.

Zum zumindest partiellen Öffnen des Extrusionskopfes wird die Kolbenstange 27 der in Frage kommenden Dreh-Hub-Kombination 25 und/oder 26 ein wenig ausgefahren, gedreht und durch die Durchlässe 31 zurückgezogen. Das schwenkbare Kopfteil 19 und/oder 20 und die entsprechenden Zwischenteile 21 bzw. 22 können dann in bekannter Weise vom Kopfteil 10 weggeschwenkt werden, wobei die betreffenden Dreh-Hub-Kombination 25 bzw. 26 entsprechend mitgeschwenkt werden.

Der Vollständigkeit halber sei noch darauf hingwiesen, daß das obere und untere schwenkbare Kopfteil 19 bzw. 20 jeweils einen in ihnen geführten Klemmkeil 34 aufweisen. Die Klemmkeile 34 werden in bekannter Weise durch Hydraulikzylinder 35 zum Spannen bzw. Lösen einer Profilleiste 36 in einer Kassette bewegt.

Sofern für die erfindungsgemäße Anordnung aller Dreh-Hub-Kombinationen in Folge des Schwenkweges der Kopfteile 19, 20 nicht genügend Platz vorhanden ist, kann es alternativ von Vorteil sein, wenn beispielsweise die Zylindergehäuse G der Dreh-Hub-Kombinationen 25 an dem oberen schwenkbaren Kopfteil 19 befestigt sind, während die Zylindergehäuse der übrigen Dreh-Hub-Kombination 26 für das untere schwenkbare Kopfteil 20 in bekannter Weise am feststehenden Kopfteil 10 befestigt sind.

### Bezugszeichenliste

- **10**: feststehendes Mittel- od. Kopfteil
- **11**: Flanschverbindung für 1. Extruder
- **12**: " " 2. "
- **13**: " " 3. "
- **14**: " " 4. "
- **15**: *oberer* Vorsprung *an 10*
- **16**: *unterer Vorsprung an 10*
- **17**: *obere* Gelenkstelle *an 15*
- **18**: *untere* Gelenkstelle an *16*
- **19**: oberes schwenkbares Kopfteil
- **20**: unteres schwenkbares Kopfteil
- **21**: oberes Zwischenteil
- **22**: *unteres* Zwischenteil
- **23**: Halterung
- **24**: Halterung
- **25**: hydraulische Dreh-Hub-Kombination
- **25'**: Achse *von 25*
- **26**: hvdraulische Dreh-Hub-Kombination
- **26'**: Achse *von 26*
- **27**: Kolbenstange
- **28**: Hammerkopf an 27
- **29**: radialer Vorsprung *von 28*
- **30**: Vorsprünge *an 10*
- **31**: Durchlaß *zwischen 30*
- **32**: Pfeil *für Bewegungsrichtung von 27*, 28
- **33**: Anlagefläche
- **34**: Klemmkeil
- **35**: Hydraulikzylinder
- **36**: Profilleiste

- **G**: Zylindergehäuse *von 25 bzw 26*
- ***K***: Extrusionskopf

## Patentansprüche

1. Extrusionskopf (K) mit einem feststehenden Kopfteil (10) und mehreren schwenkbaren Kopfteilen (19, 20) die durch Schließzylinder (25, 26) über eine auf Zug beanspruchbare, lösbare formschlüssige Verbindung (30/31) zwischen der Kolbenstange (27) der Schließzylinder (25, 26) und einem Kopfteil an das feststehende Kopfteil (10) angedrückt und mit diesem verspannt werden können,
**dadurch gekennzeichnet,**
**daß** bei zumindest einem schwenkbaren Kopfteil (19; 20) die Zylindergehäuse (G) der diesem Kopfteil (19; 20) zugeordneten Schließzylinder (25 bzw. 26) an dem betreffenden schwenkbaren Kopfteil (19; 20) befestigt sind und daß die Kolbenstangen (27) dieser Schließzylinder (25 bzw. 26) mit dem feststehenden Kopfteil (10) die auf Zug beanspruchbare, lösbare formschlüssige Verbindung (30/31) bilden.

2. Extrusionskopf nach Anspruch 1, **dadurch gekennzeichnet, daß** die Achse (25', 26') der Schließzylinder (25, 26) - bei geschlossenem Extrusionskopf (*K*) - in Richtung der durch den Innendruck des zu extrudierenden Materials erzeugten resultierenden Kraft auf das zugeordnete schwenkbare Kopfteil (19 bzw. 20) angeordnet ist.

3. Extrusionskopf nach Anspruch 1 oder 2, **dadurch gekennzeichnet, daß** die Kolbenstange (27) der Schließzylinder (25 bzw. 26) drehbar ist und der Formschluß zwischen der Kolbenstange (27) des Schließzylinders (25, 26) und dem feststehenden Kopfteil (10) durch mindestens zwei am Ende der Kolbenstange (27) gleichmäßig am Umfang verteilt angeordnete radiale Vorsprünge (29) mit einer in Richtung auf das Zylindergehäuse (G) der Schließzylinder weisenden Druckfläche und - an jeder Seite des feststehenden Kopfteils (10) - einem der Form der Vorsprünge (29) entsprechenden Durchlaß (31) mit einer von dem jeweiligen Schließzylinder (25, 26) abgewandten Anlagenfläche (33) gebildet ist.

4. Extrusionskopf nach Anspruch 3, **dadurch gekennzeichnet, daß** der an dem feststehenden Kopfteil (10) befindliche, den Vorsprüngen (29) entsprechende Durchlaß (31) in eine hinterschnittene Ausnehmung übergeht und die Anlagefläche (33) des Kopfteils (10) durch den Übergang von dem Durchlaß (31) zur Ausnehmung gebildet ist.

5. Extrusionskopf nach Anspruch 3, **dadurch gekennzeichnet, daß** der an dem feststehenden Kopfteil (10) befindliche Durchlaß (31) und die Anlagefläche (33) durch zwei seitlich am feststehenden Kopfteil (10) angeordnete Vorsprünge (30) gebildet sind.

6. Extrusionskopf nach einem der Ansprüche 1 bis 5, **dadurch gekennzeichnet, daß** die Schließzylinder (25, 26) als Dreh-Hub-Kombination ausgebildet sind.

## Claims

1. Extrusion head (K) with a fixed head portion (10) and several swivelling head portions (19, 20), which may be pressed by means of closing cylinders (25, 26) via a detachable positive connection (30/31) capable of being subjected to tension between the piston rod (27) of the closing cylinders (25, 26) and a head portion onto the fixed head portion (10) and be braced therewith, **characterised in that**
with at least one swivelling head portion (19; 20), the cylinder housings (G) of the closing cylinders (25 or 26) allocated to this head portion (19; 20) are fastened to the respective swivelling head portion (19; 20), and that with the fixed head portion (10) the piston rods (27) of these closing cylinders (25 or 26) form the detachable positive connection (30/31) capable of being subjected to tension.

2. Extrusion head according to Claim 1, **characterised in that** - when the extrusion head (K) is closed - the axis (25', 26') of the closing cylinders (25, 26) is disposed in the direction of the resulting force generated by the internal pressure of the material to be extruded onto the allocated swivelling head portion (19 or 20).

3. Extrusion head according to Claim 1 or 2, **characterised in that** the piston rod (27) of the closing cylinder (25 or 26) is rotatable and the form closure between the piston rod (27) of the closing cylinder (25, 26) and the fixed head portion (10) is formed by at least two radial projections (29) evenly distributed on the periphery at the end of the piston rod (27) with a pressure surface directed towards the cylinder housing (G) of the closing cylinders and - on each side of the fixed head portion (10) - an opening corresponding to the shape of the projections (29) with a contact surface (33) facing away from the respective closing cylinder (25, 26).

4. Extrusion head according to Claim 3, **characterised in that** the opening (31) corresponding to the projections (29) and located on the fixed head portion (10) merges into an undercut recess and the contact surface (33) of the head portion (10) is formed by the transition from the opening (31) to the recess.

5. Extrusion head according to Claim 3, **characterised in that** the opening (31) located on the fixed head portion (10) and the contact surface (33) are formed by two projections (30) disposed laterally on the fixed head portion (10).

6. Extrusion head according to one of Claims 1 to 5, **characterised in that** the closing cylinders (25, 26) are configured as a rotate and lift combination.

## Revendications

1. Tête d'extrusion (K) avec une partie de tête fixe (10) et plusieurs parties de tête pivotantes (19, 20) qui peuvent être appliquées par des cylindres de fermeture (25, 26) par une liaison (30/31) pouvant être sollicitée en traction, relâchable, par concordance des formes, entre la tige de piston (27) des cylindres de fermeture (25, 26) et une partie de tête à la partie de tête fixe (10) et peuvent être mises en serrage avec celle-ci,
**caractérisée en ce qu'**au moins dans le cas d'une partie de tête pivotante (19, 20), les carters de cylindre (G) des cylindres de fermeture (25 respectivement 26) associés à cette partie de tête (19 ; 20) sont fixés à la partie de tête pivotante concernée (19 ; 20) et **en ce que** les tiges de piston (27) de ces cylindres de fermeture (25 respectivement 26) forment avec la partie de tête fixe (10) la liaison (30/31) pouvant être sollicitée en traction, relâchable, par concordance des formes.

2. Tête d'extrusion selon la revendication 1, **caractérisée en ce que** l'axe (25', 26') des cylindres de fermeture (25, 26)-la tête d'extrusion (K) étant fermée - est disposé dans la direction de la force résultante produite par la pression interne du matériau à extruder sur la partie de tête pivotante associée (19 respectivement 20).

3. Tête d'extrusion selon la revendication 1 ou 2,
**caractérisée en ce que** la tige de piston (27) des cylindres de fermeture (25 respectivement 26) peut tourner, et **en ce que** la concordance des formes entre la tige de piston (27) du cylindre de fermeture (25, 26) et la partie de tête fixe (10) est formée par au moins deux saillies radiales (29) disposées à l'extrémité de la tige de piston (27) selon une répartition régulière, avec une face de pression orientée dans la direction du carter de cylindre (G) des cylindres de fermeture et - de chaque côté de la partie de tête fixe (10) - un passage (31) correspondant à la forme des saillies (29) avec une face d'application (33) éloignée du cylindre de fermeture respectif (25, 26).

4. Tête d'extrusion selon la revendication 3, **caractérisée en ce que** le passage (31) se trouvant à la partie de tête fixe (10), correspondant aux saillies (29) rejoint un évidement à contre-dépouille, et **en ce que** la face d'application (33) de la partie de tête (10) est formée par la transition du passage (31) vers l'évidement.

5. Tête d'extrusion selon la revendication 3, **caractérisée en ce que** le passage (31) se trouvant à la partie de tête fixe (10) et la face d'application (33) sont formés par deux saillies (30) disposées latéralement à la partie de tête fixe (10).

6. Tête d'extrusion selon l'une des revendications 1 à 5,
**caractérisée en ce que** les cylindres de fermeture (25, 26) sont réalisés comme combinaison de rotation et de levage.
